# EUROPÄISCHE PATENTANMELDUNG

(11) **EP 2 042 063 A1**
(43) Veröffentlichungstag der Anmeldung: **01.04.2009**
(21) Anmeldenummer: 08405202.6
(22) Anmeldetag: 26.08.2008
(51) Int. Cl.: A47J 31/44

(54) **Anordnung zur Erzeugung von Milchschaum**

(30) Priorität: 28.09.2007 CH 15102007
(71) Anmelder: Cafina AG, 5502 Hunzenschwil (CH)
(72) Erfinder: Meier, Hermann, 5312 Döttingen (CH)
(74) Vertreter: Rottmann, Richard

(57) **Zusammenfassung**

Es wird eine Anordnung zur Erzeugung von Milchschaum vorgeschlagen, die mit einer Milchzufuhrleitung (2), einer Pumpe (5) zum Fördern der Milch, zumindest einem Mittel zum Erhitzen der Milch sowie einem Mischelement (1) zum Vermischen der Milch mit der als Aufschäummedium dienenden Luft versehen ist. Die Milch wird zuerst erhitzt und danach wird der Milch die Luft zwangsweise zugeführt. Anschliessend wir das Milch-Luft-Gemisch einem Mischabschnitt des Mischelements (1) zugeführt, wo es zur Erzeugung des qualitativ hochstehenden Milchschaums mehrfach umgelenkt und/oder aufgeteilt wird.

## Beschreibung

Die Erfindung betrifft eine gemäss dem Oberbegriff des Anspruchs 1 ausgebildete Anordnung zur Erzeugung von Milchschaum sowie ein Verfahren zur Erzeugung von Milchschaum gemäss dem Anspruch 11.

Derartige Anordnungen kommen insbesondere in Espressomaschinen oder zusammen mit Espressomaschinen zum Einsatz, wobei der Milchschaum beispielsweise für die Herstellung von Cappuccino oder Latte Macchiato verwendet wird.

Zur Erzeugung von Milchschaum ist eine Vielzahl sogenannter Emulgiereinrichtungen bekannt. Gattungsgemässe Emulgiereinrichtungen verfügen im allgemeinen über ein Mischelement, das mit einem in eine Saugkammer mündenden Dampfzufuhrkanal versehen ist. Die Saugkammer ihrerseits ist mit einem Milchzufuhrkanal und einem Luftzufuhrkanal verbunden. Durch den Dampfstrom wird in der Saugkammer unter Ausnutzung des sogenannten Venturi Effekts ein Unterdruck erzeugt, welcher bewirkt, dass Milch über einen Milchzufuhrkanal und Luft über einen Luftzufuhrkanal in die Saugkammer gesaugt werden. Dabei entsteht ein Dampf-Luft-Milchgemisch, welches in einer nachfolgenden Emulgierkammer in eine turbulente Strömung versetzt wird, so dass eine heisse Emulsion aus Milch und Luft entsteht. Somit wird der Dampf einerseits zum Erhitzen der Milch und andererseits zum Ansaugen der als Aufschäummedium dienenden Luft benutzt. Derartige Emulgiereinrichtungen sind beispielsweise aus der EP 0 195 750 sowie der EP 0 858 757 bekannt.

Da bei den meisten der bekannten Emulgiereinrichtungen die Luft an einer einzigen Stelle zugeführt wird, müssen Massnahmen getroffen werden, damit die Luft derart mit der Milch vermischt wird, dass ein gleichmässiger, homogener Milchschaum entsteht.

Aus der EP-A-0 600 826 ist eine Vorrichtung zur Erzeugung von Milchschaum für Cappuccino-Kaffee oder ähnlichen Getränken bekannt. Die Vorrichtung weist einen elektrisch beheizten Behälter zur Aufnahme der Milch sowie ein dem Behälter nachgeschaltetes Widerstandsdurchlasselement auf. Das Widerstandsdurchlasselement ist einlasseitig mit der Milchzufuhrleitung sowie einer in diese führende Luftzufuhrleitung verbunden. Zum Zuführen der Milch ist eine elektrisch betriebene Pumpe vorgesehen. Auslassseitig weist die Vorrichtung eine Öffnung auf, die in eine den Schaum von dem flüssigen Milchanteil trennende Kammer mündet. Das Widerstandsdurchlasselement setzt sich aus einem Zylinder und einem darin angeordneten Element zusammen, wobei letzteres an seinem Umfang einen lamellenartigen Aufbau aufweist, der einen Labyrinthdurchlass bildet, durch welchen die Milch gepresst wird.

Schliesslich ist in der EP-A-1 593 330 ein Verfahren und eine Vorrichtung zur Erzeugung von Milchschaum oder von warmen Getränken offenbart. Die Vorrichtung umfasst eine Pumpe, mittels welcher Milch aus einem Behälter angesaugt und zu einem Auslass gefördert wird. In der Milchzufuhrleitung ist ein Durchlauferhitzer zum Erhitzen der Milch angeordnet. Die Milchzufuhrleitung ist mit einer Luftzufuhrleitung verbunden, wobei letzere mit einem einstellbaren Luftmengenregler versehen ist. In der Luftzufuhrleitung ist ein Betätigungsventil angeordnet, mittels welchem die Luftzufuhr zum Erzeugen heisser Milch unterbrochen werden kann.

Augehend vom beschriebenen Stand der Technik besteht die Aufgabe der Erfindung darin, eine Anordnung zur Erzeugung von Milchschaum derart auszubilden, dass diese bei kompaktem und einfachem Aufbau einen qualitativ hochwertigen Milchschaum erzeugt.

Diese Aufgabe wird durch die im Anspruch 1 angeführten Merkmale gelöst.

Indem die als Aufschäummedium dienende Luft der Milch zwangsweise zugeführt und das Milch-Luft-Gemisch danach in einem Mischabschnitt eines statischen Mischers mehrfach umgelenkt und/oder aufgeteilt und/oder in Rotation versetzt wird, kann auf einfache Weise ein qualitativ hochwertiger Milchschaum erzeugt werden. Das Mischelement selber kann sehr kompakt ausgebildet sein.

Jedenfalls wird durch das zwangsweise Zuführen der Luft zu der Milch und das nachfolgende mehrfache Umlenken und/oder Aufteilen und/oder in Rotation versetzen dieses Milch-Luft-Gemischs in dem Mischabschnitt des Mischelements die Grundvoraussetzung für die Erzeugung eines qualitativ hochwertigen Milchschaums geschaffen, der sich u.a. durch seine Homogenität, Stabilität, Steifigkeit und die kleinen Schaumblasen auszeichnet.

In besonders bevorzugter Weise wird die Milch vor dem Einleiten in das Mischelement mittels eines elektrisch betriebenen Heizelements erwärmt, denn es hat sich gezeigt, dass das Zuführen der Luft zu der bereits erwärmten Milch für die Qualität des Endprodukts vorteilhaft ist, und dass sich andererseits das Erwärmen der Milch mittels eines elektrisch betriebenen Heizelements, anstelle des gängigen Erwärmens mittels Dampf, ebenfalls positiv auf die Qualität des erzeugten Milchschaums auswirkt, da die Milch nicht zusätzlich mit Wasser angereichert wird.

Bevorzugte Ausführungsbeispiele der Anordnung sind in den abhängigen Ansprüchen 2 bis 10 umschrieben.

Im Anspruch 11 wird zudem ein Verfahren zur Erzeugung von Milchschaum mit einer gemäss einem der Ansprüche 1 bis 10 ausgebildeten Anordnung beansprucht. Bevorzugte Weiterbildungen des Verfahrens sind in den abhängigen Ansprüchen 12 bis 15 definiert.

Nachfolgend wird ein bevorzugtes Ausführungsbeispiel der Erfindung anhand von Zeichnungen näher erläutert. Dabei zeigt:
- Fig. 1: in schematischer Darstellung die Anordnung zur Erzeugung von Milchschaum;
- Fig. 2a: ein erstes Ausführungsbeispiel eines Mischelements in schematischer Darstellung, und
- Fig. 2b: ein weiteres Ausführungsbeispiel eines Mischelements in schematischer Darstellung.

Die Anordnung zur Erzeugung von Milchschaum weist ein Mischelement 1 auf, in welchem der durchströmenden Milch Luft zur Erzeugung des Milchschaums zugeführt wird. Das Mischelement 1 ist über eine Milchleitung 2 mit einem Milchbehälter 3 verbunden, der in einer Kühlvorrichtung 4 aufgenommen ist. Zur zwangsweisen Förderung der Milch ist eine Milchpumpe 5 vorgesehen, der ein elektrisch betriebener Durchlauferhitzer 6 zum Erwärmen der Milch nachgeschaltet ist. Der Durchlauferhitzer 6 ist mit einem schematisch angedeuteten Temperatursensor 7 versehen, mittels welchem die Temperatur der im Durchlauferhitzer erwärmten Milch gemessen werden kann. Dem zwangsweisen Zuführen von Luft dient eine Luftpumpe 10, der ein Luftfilter 11 vor- und eine Blende 12 nachgeschaltet ist. Der Luftfilter 11 kann sowohl als herkömmlicher mechanischer Filter oder beispielsweise auch in Form eines Aktivekohle-Filters ausgebildet sein. Mittels der verstellbaren Blende 12 kann die der Milch pro Zeiteinheit zwangsweise zugeführte Luftmenge variiert werden. Im weiteren ist eine elektronische Steuervorrichtung 13 vorgesehen, welche mit den beiden Pumpen 5, 10, dem Erhitzer 6 dem Temperatursensor 7 sowie der Blende 12 elektrisch verbunden ist und der Steuerung der gesamten Anordnung dient. Die Steuerungsvorrichtung 13 ist mit zumindest einer Taste 13a zum Starten bzw. Stoppen des Schäumvorgangs versehen. Das Mischelement 1 ist auslassseitig mit einem Auslasselement 8 verbunden, welches zwei Auslässe 9 aufweist, über welche der erzeugte Milchschaum austreten kann. Dieses Auslasselement 8 kann einen Bestandteil einer Kaffeemaschine bilden, wobei es in diesem Fall auch als Auslass für die zubereiteten Kaffeegetränke dienen kann.

Das Mischelement 1 weist einen ersten Abschnitt 14 auf, in dem die beiden Medien, namentlich die Milch und die Luft, zusammengeführt werden. Auf diesen ersten Abschnitt 14 folgt der eigentliche Mischabschnitt 15, der dem gleichmässigen Vermischen der beiden Medien zur Erzeugung eines feinporigen Milchschaums dient. Der Mischabschnitt 15 beinhaltet einen statischen Mischer, der mit einer Vielzahl von Mischflügeln 16 versehen ist, welche ein mehrfaches Umlenken des Milch-Luft-Gemischs bewirken. Dieser statische Mischer kann in der Form eines auswechselbaren Mischeinsatzes ausgebildet sein. Zusätzlich können die Mischflügel 16 auch als Trennelemente ausgebildet sein, welche das Aufteilen des Milch-Luft-Gemischs bewirken, wobei die aufgeteilten Anteile ggf. auch immer wieder gezielt zusammengeführt werden können. Alternativ dazu können auch Mischflügel vorgesehen werden, welche eine Rotation des Milch-Luft-Gemischs bewirken, wie nachfolgend noch näher erläutert wird.

Die Mischgüte bei den hier zur Rede stehen statischen Mischern wird insbesondere durch die Anzahl und Geometrie der Mischelemente -Mischflügel- bestimmt. Der Grad der Durchmischung wird dabei durch zwei Effekte, namentlich die Strömungsteilung sowie die radiale Durchmischung beeinflusst.

Sofern das Milch-Luft-Gemisch das Mischelement weitgehend laminar durchströmt, muss eine vergleichsweise grosse Anzahl von Mischflügeln vorgesehen werden, damit eine gute Durchmischung der beiden Medien -Milch-Luft- erreicht wird. Diesbezügliche Versuche haben ergeben, dass für eine gute Durchmischung der beiden Medien das Gemisch ca. 12 bis 36 mal umgelenkt und/oder aufgeteilt werden sollte.

Wenn das Milch-Luft-Gemisch innerhalb des Mischelements in eine turbulente Strömung versetzt wird, kann die Anzahl der Mischflügel reduziert werden. Bei einem Wendelmischer, bei dem die Mischelemente wendelförmig ausgebildet sind und die Drehrichtung des Gemischs beim Übergang vom einen zum nachfolgenden Mischflügel geändert wird, entsteht im Übergangsbereich jeweils eine hoch turbulente Zone, in der ein Grossteil der Durchmischung stattfindet. Bei einem derart gestalteten Mischelement kann die Anzahl der Mischflügel auf beispielsweise 2 bis 4 reduziert werden.

Obwohl in diesem Beispiel nur vier Mischflügel 16 eingezeichnet sind, hat es sich als vorteilhaft erwiesen, wenn zumindest sechs, insbesondere zumindest zwölf Mischflügel 16 zum Umlenken und/oder Aufteilen des Milch-Luft-Gemischs vorgesehen werden.

Vorzugsweise sind die Mischflügel 16 derart gestaltet, dass das Gemisch zusätzlich auch noch in eine Rotation versetzt und die Drehrichtung entlang des Mischabschnitts ggf. mehrmals geändert wird.

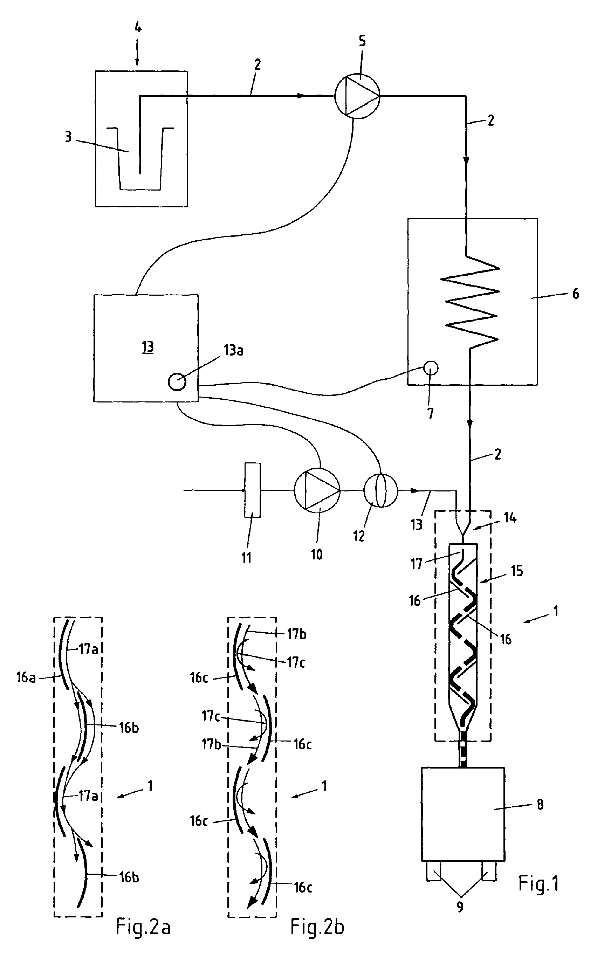

Die Funktionsweise der in der Figur 1 dargestellten Anordnung stellt sich wie folgt dar:

Durch Drücken der Taste 13a wird der Aufschäumvorgang gestartet. Dabei wird sowohl die Milchpumpe 5 wie auch der Durchlauferhitzer 6 aktiviert, so dass die aus dem Milchbehälter 3 geförderte Milch im Durchlauferhitzer 6 erwärmt wird und danach in das Mischelement 1 einströmt. Gleichzeitig wird auch die Luftpumpe 10 aktiviert wodurch dem Mischelement 1 zwangsweise Luft zugeführt wird. Vorzugsweise wird der in das Mischelement 1 einströmenden Milch von Anfang an Luft zugeführt.

Da die in das Mischelement 1 einströmende Milch bereits auf eine vordefinierte Temperatur erhitzt wurde, wird die Luft der warmen Milch zugeführt. Die Temperatur der erhitzten Milch am Auslass des Durchlauferhitzers 6 kann mittels des Temperatursensors 7 gemessen und ggf. mittels der Steuerungsvorrichtung 13 auf einen vorgegebenen Sollwert nachjustiert werden. Die Milch wird im Durchlauferhitzer 6 üblicherweise auf eine Temperatur von ca. 60°-70° Celsius erhitzt. Die pro Zeiteinheit zugeführte Luftmenge kann mittels der Blende 12 variiert werden.

Das zwangsweise Zuführen der Luft bewirkt, dass sich die Luft sofort mit der warmen Milch vermischt. Die beiden Medien dieses Milch-Luft-Gemischs werden danach im Mischabschnitt 15 durch mehrfaches Umlenken und/oder Aufteilen intensiv und gleichmässig miteinander vermischt, so dass am Auslass des Mischelements 1 ein gleichmässiger, feinporiger Milchschaum zur Verfügung steht. Das Mischelement 1 kann bei richtiger Dimensionierung in jeder beliebigen Lage eingebaut werden, ohne dass die Qualität des erzeugten Milchschaums in nennenswerter Weise beeinträchtigt wird. Daher ist es unerheblich, ob das Mischelement von der Milch vertikal, horizontal oder schräg durchströmt wird.

Insbesondere diejenigen Elemente des Mischelements, welche mit Milch in Berührung kommen, sind aus einem hydrophoben und/oder oleophoben Material wie beispielsweise PTFE (Teflon) gefertigt.

Der Vorteil der erfindungsgemäss ausgebildeten Anordnung besteht u.a. darin, dass die Anordnung vergleichsweise einfach aufgebaut ist, aus relativ wenigen Einzelteilen besteht und ein qualitativ hochwertiger, namentlich ein homogener, feinporiger und fester Milchschaum erzeugt werden kann. Unter einem homogenen Milchschaum wir im vorliegenden Fall ein Milchschaum verstanden, der sich durch seine Gleichmässigkeit auszeichnet. Zudem steht der feinporige Milchschaum schon direkt am Auslass des Mischelements 1 zur Verfügung, so dass auf nachfolgende Emulgiereinrichtungen verzichtet werden kann. Im Vergleich mit herkömmlichen Anordnungen brauchen auch kaum Ventile oder dgl. vorgesehen zu werden. Die Anordnung kann daher auch sehr kompakt ausgebildet und kostengünstig realisiert werden. Zudem hat sich die Anordnung in Bezug auf variierende Umgebungsbedingungen wie auch verändernde Betriebsparameter als unkritisch erwiesen.

Zu erwähnen ist, dass das Erhitzen der Milch mittels eines elektrisch betriebenen Heizelements 6 gegenüber dem Erhitzen mittels Dampf zu einem qualitativ hochstehenderen Milchschaum führt, da beim Erhitzen der Milch mittels Dampf Letzterer in der Milch kondensiert und die Milch im eigentlichen Sinn wässrig macht, was sich sowohl in optischer wie auch geschmacklicher Hinsicht negativ auf das erzeugte Endprodukt in der Form des Milchschaums auswirkt.

Durch das zwangsweise Fördern der Milch wie auch der Luft kann einerseits die absolute Menge der pro Zeiteinheit geförderten Menge an Milch- bzw. Luft variiert werden. Andererseits kann aber auch das Verhältnis Milch/Luft mittels der verstellbaren Blende 12 verändert werden.

Durch die örtliche Trennung von Heizung und Mischer wird zudem die Gefahr von Milchablagerungen im Mischelement 1 reduziert, da dadurch heisse Stellen in dem Mischelement 1 vermieden werden können.

Ggf. kann mit der erfindungsgemäss ausgebildeten Anordnung auch kalte Milch aufgeschäumt werden. In diesem Fall würde die Milch unter Umgehung des Durchlauferhitzers 6 in das Mischelement 1 eingeleitet. Natürlich könnte die Milch auch durch den Durchlauferhitzer 6 hindurchgeleitet werden, sofern dieser nicht aktiviert ist. Zusätzlich könnte auch noch ein Kühlaggregat vorgesehen werden, in welchem die aufzuschäumende Milch vor dem Einleiten in das Mischelement 1 auf eine vorbestimmte Maximaltemperatur abgekühlt wird. Jedenfalls ist es durchaus möglich, mit ein und demselben Mischelement 1 sowohl kalte wie auch warme Milch aufzuschäumen. Auch beim Aufschäumen von kalter Milch hat es sich als äusserst vorteilhaft erwiesen, wenn die als Aufschäummedium dienende Luft der durchströmenden Milch zwangsweise zugeführt wird.

Die Fig. 2a zeigt in schematischer Darstellung den Fluss des Milch-Luft-Gemischs durch ein erstes Ausführungsbeispiel eines Mischelements 1. Das Mischelement ist mit einer Vielzahl von Mischflügeln 16a, 16b versehen. Die einen Mischflügel 16a dienen dabei dem Umlenken des Milch-Luft-Gemischs während die anderen Mischflügel 16b zum Aufteilen des Milch-Luft-Gemischs vorgesehen sind. Natürlich sind auch kombinierte Mischflügel denkbar, welche das Milch-Luft-Gemisch sowohl umlenken wie auch aufteilen. Jedenfalls soll durch die Anzahl und Gestaltung der Mischflügel 16a, 16b sichergestellt werden, dass am Auslass des Mischelements ein gleichmässiger Milchschaum austritt. Wie bereits vorgängig erwähnt hat es sich als vorteilhaft erwiesen, wenn zumindest sechs, insbesondere zumindest zwölf Mischflügel 16a, 16b zum Umlenken und/oder Aufteilen des Milch-Luft-Gemischs vorgesehen werden. Durch die Linien 17a ist der Fluss des Milch-Luft-Gemischs durch das Mischelement angedeutet.

Die Fig. 2b zeigt in schematischer Darstellung ein weiteres Ausführungsbeispiel eines Mischelements 1. Das in der Form eines Wendelmischers ausgebildete Mischelement 1 weist eine Vielzahl von wendelartig ausgebildeten Mischflügeln 16c auf, welche das Milch-Luft-Gemisch in Rotation versetzen. Die Mischflügel 16c sind in axialer Richtung derart hintereinander angeordnet, dass die Drehrichtung des Milch-Luft-Gemischs mit jedem Mischflügel geändert wird, wie dies durch Pfeile 17b angedeutet ist. Durch die kleinen Pfeile 17c wird zudem angedeutet, dass das Milch-Luft-Gemisch auch in radialer Richtung durchmischt wird, wodurch der Unterschied in der radialen Strömungsgeschwindigkeit minimiert werden kann. Eine gleichmässige Strömungsgeschwindigkeit über dem ganzen Querschnitt sorgt jedenfalls für eine gleichmässige Blasenverteilung und Blasengrösse.

Die grundsätzliche Ausbildung des Mischelements 1 als Wendelmischer hat den grossen Vorteil, dass ein Wendelmischer keine Totzonen aufweist, wodurch insbesondere die Verschmutzungsgefahr reduziert und ein guter Selbstreinigungseffekt erzielt wird.

## Patentansprüche

1. Anordnung zur Erzeugung von Milchschaum, mit einer Milchzufuhrleitung (2), einer Pumpe (5) zum Fördern der Milch, sowie einem Mischelement (1) zum Vermischen der Milch mit dem die Aufschäumung bewirkenden Medium, **dadurch gekennzeichnet, dass** die Anordnung Mittel zum zwangsweisen Zuführen von als Aufschäummedium dienender Luft zu der durchströmenden Milch umfasst, und dass das Mischelement (1) mit einem mit Umlenkmitteln versehenen Mischabschnitt (15) versehen ist, in dem das Milch-Luft-Gemisch mehrfach umgelenkt und/oder aufgeteilt und/oder in Rotation versetzt wird.

2. Anordnung nach Anspruch 1, **dadurch gekennzeichnet, dass** das Mischelement (1) zumindest sechs zum Umlenken und/oder Aufteilen des Milch-Luft-Gemischs ausgebildete Mischflügel (16a, 16b) aufweist.

3. Anordnung nach Anspruch 1, **dadurch gekennzeichnet, dass** das Mischelement (1) zumindest zwei wendelartig ausgebildete Mischflügel (16c) aufweist, welche das Milch-Luft-Gemisch in Rotation versetzen, wobei die Mischflügel (16c) derart angeordnet und ausgebildet sind, dass die Drehrichtung entlang des Mischabschnitts mehrmals ändert.

4. Anordnung nach einem der vorhergehenden Ansprüche, **dadurch gekennzeichnet, dass** die Anordnung ein dem Mischelement (1) vorgeschaltetes Mittel zum Erhitzen der Milch aufweist.

5. Anordnung nach Anspruch 4, **dadurch gekennzeichnet, dass** das Mittel zum Erwärmen der Milch als elektrisch betriebenes Heizelement, insbesondere als elektrisch betriebener Durchlauferhitzer (6) ausgebildet ist.

6. Anordnung nach einem der vorhergehenden Ansprüche, **dadurch gekennzeichnet, dass** die Anordnung einen Temperatursensor (7) zum Erfassen der Temperatur der Milch aufweist.

7. Anordnung nach einem der vorhergehenden Ansprüche, **dadurch gekennzeichnet, dass** die Anordnung eine Pumpe (10) zum zwangsweisen Zuführen der Luft umfasst und/oder zumindest ein Mittel zum Verändern der pro Zeiteinheit der Milch zugeführten Luftmenge vorgesehen ist.

8. Anordnung nach Anspruch 7, **dadurch gekennzeichnet, dass** als Mittel zum Verändern der pro Zeiteinheit der Milch zugeführten Luftmenge ein in der Luftzufuhrleitung (13) angeordnetes, verstellbares Drosselelement vorgesehen ist.

9. Anordnung nach Anspruch 7 oder 8, **dadurch gekennzeichnet, dass** der Pumpe (10) zum Fördern der Luft ein Filter (11) vorgeschaltet ist.

10. Anordnung nach einem der vorhergehenden Ansprüche, **dadurch gekennzeichnet, dass** zumindest die mit Milch in Berührung kommenden Teile des Mischelements (1) aus einem hydrophoben und/oder oleophoben Material gefertigt sind.

11. Verfahren zur Erzeugen von Milchschaum, mit einer gemäss einem der Ansprüche 1 bis 10 ausgebildeten Anordnung, **dadurch gekennzeichnet, dass** der Milch vor dem Einleiten in das Mischelement (1) die als Aufschäummedium dienende Luft zwangsweise zugeführt wird, wobei das Milch-Luft-Gemisch danach in dem Mischelement (1) mehrfach umgelenkt und/oder aufgeteilt und/oder in Rotation versetzt wird.

12. Verfahren nach Anspruch 11, **dadurch gekennzeichnet, dass** das Milch-Luft-Gemisch in dem Mischelement (1) zumindest sechs mal umgelenkt und/oder sechs mal aufgeteilt wird.

13. Verfahren nach Anspruch 11, **dadurch gekennzeichnet, dass** das Milch-Luft-Gemisch in dem Mischelement (1) in Rotation versetzt wird, wobei die Drehrichtung zum Erzeugen einer turbulenten Strömung zumindest zwei mal geändert wird.

14. Verfahren nach einem der Ansprüche 11 bis 13 **dadurch gekennzeichnet, dass** die Milch vor dem Einleiten in das Mischelement (1) auf eine Temperatur von zumindest 50°C, insbesondere zumindest 60°C erhitzt wird.

15. Verfahren nach einem der Ansprüche 11 bis 14, **dadurch gekennzeichnet, dass** die der Milch pro Zeiteinheit zwangsweise zugeführte Menge an Luft variiert wird.
